Europäisches Patentamt

European Patent Office

Office européen des brevets

(11) Publication number: **0 083 910**
**B1**

(12) **EUROPEAN PATENT SPECIFICATION**

(45) Date of publication of patent specification: **07.08.85**

(51) Int. Cl.⁴: **F 16 L 17/04, F 16 L 33/26**

(21) Application number: **82830278.6**

(22) Date of filing: **09.11.82**

(54) Flexible metal hose assembly through which gaseous fluids flow at high temperature.

(30) Priority: **13.01.82 IT 5281782 u**

(43) Date of publication of application:
**20.07.83 Bulletin 83/29**

(45) Publication of the grant of the patent:
**07.08.85 Bulletin 85/32**

(84) Designated Contracting States:
**AT DE GB SE**

(56) References cited:
**DE-A-2 100 952**
**GB-A- 600 142**
**US-A-4 142 743**

(73) Proprietor: **TUBIFLEX S.p.A.**
**Via Monteponi 26**
**I-10135 Torino (IT)**

(72) Inventor: **Quaranta, Cosimo**
**Via Monteponi 26**
**I-10135 Torino (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The present invention relates to a flexible metal hose assembly of the type comprising a flexible hose connecting two sections of a pipe through which a gaseous fluid is intended to pass at high temperature, such as, for example, the exhaust pipe for a motor vehicle engine, the flexible tube being constituted by a helically wound metal strip which forms a plurality of turns joined together by folded edges of the strip to define a helical groove on the internal surface of the flexible hose.

Known flexible metal hose assemblies of the type specified above include, at the ends of the flexible hose, rigid tubular connecting elements which are generally fixed to the hose by screwing or welding. These known solutions thus have a relatively complicated structure and do not allow easy and rapid assembly.

The object of the present invention is to provide a flexible metal hose assembly of the aforesaid type which overcomes the disadvantages mentioned above, and which ensures good sealing against the escape of the gaseous fluid which flows through the hose.

In order to achieve this object, the present invention provides a flexible metal hose assembly of the type specified above, characterised in that:

— the inner diameter of the hose corresponds substantially to the outer diameter of the pipe;
— the ends of the hose each have a plurality of longitudinal cuts increasing the deformability of the ends of the hose so as to facilitate the insertion of the two pipe sections connected into the ends of the flexible hose;
— on each end of the hose is mounted a collar having clamping means for clamping the two pipe sections within the ends of the flexible hose, and
— the helical internal groove of the flexible hose is provided at each end of the flexible hose with a blocking member which blocks the helical passage defined by said groove and the outer surface of the corresponding pipe section, each blocking member being located at a distance from the respective mouth of the hose which is slightly greater than the length of the cuts.

By virtue of the characteristics mentioned above, the flexible metal hose assembly according to the present invention ensures optimum sealing, is of simple construction, and is easy and rapid to assemble.

Further characteristics and advantages of the present invention will emerge from the description which follows with reference to the appended drawings, given purely by way of non-limiting example, in which:

Figure 1 is a partially exploded perspective view of a flexible metal hose assembly according to the present invention, and

Figure 2 is a section taken on the line II—II of Figure 1.

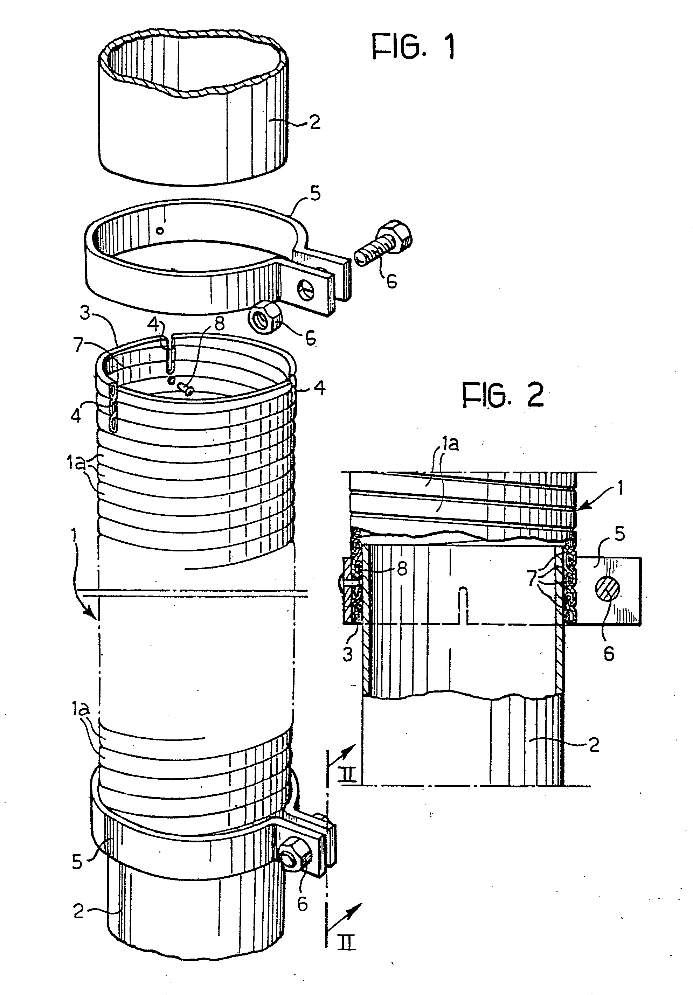

In Figure 1 is shown a flexible metal hose 1 which is intended to be inserted in the exhaust pipe of a motor vehicle engine. The two sections of the exhaust pipe which are to be connected by the flexible metal hose 1 are indicated 2. The hose 1 is constituted by a metal strip (for example, of stainless steel) which is wound into a helix to form a series of turns connected by folded edges of the strip (see Figure 2).

The inner diameter of the hose 1 corresponds to outer diameter of the two sections 2 of the exhaust pipe. Moreover, the ends 3 of the hose 1 each have three longitudinal cuts 4 which are equiangularly spaced from each other, in order to facilitate the insertion of two pipe sections 2 into the ends of the flexible hose 1. On each of these ends is mounted a collar 5 provided with a clamping bolt 6 for clamping the corresponding pipe section 2 within the flexible hose.

In order to connect the hose 1 to the two pipe sections 2, one of the two pipe sections 2 is first inserted within one end of the hose 1. The hose 1 is then deformed so as to bring its opposite end into correspondence with the other pipe section 2 so as to allow the insertion of this pipe section into the flexible hose 1. The latter consequently resumes its undeformed configuration. The bolts 6 of the collars 5 are then tightened to clamp the ends of the hose 1 over the two pipe sections 2, so as to ensure sealing against the escape of the gaseous fluid destined to flow through the hose. The longitudinal cuts 4 increase the deformability of the ends of the hose 1, further improving the sealing of the connections between the hose 1 and the pipe sections 2.

The particular seamed-turn structure of the hose 1 results in the presence of a helical groove 7 within the hose, which extends over the entire length of the hose itself. In order to prevent the escape of any gas along this groove, each end of the flexible hose is provided with a rivet 8 which has its head located so as to block the helical passage defined by the internal groove 7 and the outer surface of the corresponding pipe section 2. The distance of each rivet 8 from the corresponding end of the hose 1 is slightly greater than the length of the cuts 4.

As is clear from Figure 1, the collars 5 have a width greater than the length of the cuts 4 and each rivet 8 also passes through the wall of the corresponding collar 5, thus fixing it to the hose 1.

## Claims

1. A flexible metal hose assembly comprising a flexible metal hose (1) connecting two sections (2) of a pipe through which a gaseous fluid is intended to pass at high temperature, such as, for example, the exhaust pipe of a motor vehicle engine, the flexible hose being constituted by a helically wound metal strip which forms a plurality of turns joined together by folded edges of the strip to define a helical groove (7) on the internal surface of the flexible tube, characterised in that:

— the inner diameter of the hose (1) corresponds substantially to the outer diameter of the pipe;

— the ends of the hose (1) each have a plurality of longitudinal cuts (4) increasing the deformability of the ends of the hose (1) so as to facilitate the insertion of the two pipe sections (2) connected into the ends of the flexible hose (1);

— on each end of the hose (1) is mounted a collar (5) having clamping means (6) for clamping the two pipe sections (2) within the ends of the flexible hose (1), and

— the helical internal groove (7) of the flexible hose (1) is provided at each end of the flexible hose (1) with a blocking member which blocks the helical passage defined by said groove and the outer surface of the corresponding pipe section (2), each blocking member being located at a distance from the respective mouth of the hose (1) which is slightly greater than the length of the cuts (4).

2. A flexible metal hose assembly as claimed in Claim 1, characterised in that the blocking means comprise rivets (8) each fitted to the hose (1) so that its head blocks the internal groove (1).

3. A flexible metal hose assembly as claimed in Claim 1, characterised in that the collar (5) has a width which is greater than the length of the longitudinal cuts (4), and each rivet (8) also passes through the wall of a collar (5).

**Patentansprüche**

1. Flexible Metallschlauchanordnung mit einem flexiblen Metallschlauch (1), welcher zwei Sektionen (2) einer Rohrleitung verbindet, durch welche gasförmige Flüssigkeit mit hoher Temperatur, z.B. Auslaufrohr eines Kraftfahrzeuges, fließt, wobei der flexible Sclauch aus einem umwickelten schraubenförmigen Metallstreifen besteht, der eine Mehrheit von Windungen formt, zusammen verbunden mit den gebogenen Kanten des Streifens, um eine schraubenförmige Rille (7) aus der inneren Oberfläche des flexiblen Schlauches zu bilden, dadurch gekennzeichnet, daß

— der innere Durchmesser des Schlauches (1) im wesentlichen mit dem Außendurchmesser des Rohres übereinstimmt;

— die Schlauchenden (1) je eine Mehrheit von Kerben in der Längsrichtung (4) haben, die die Verformung der Schlauchenden (1) erhöht, um die Einfügung der beiden Sektionen des Rohres (2) zu erleichtern, die an den Enden des flexiblen Schlauches (1) verbunden sind;

— an jedem Schlauchende (1) ein Ring (5) montiert ist, versehen mit Spermittel (6) um die zwei Sektionen (2) im Innern der flexiblen Sclauchenden (1) zu befestigen, und

— die schraubenförmige innere Rille (7) des flexiblen Schlauches (1) an jedem Ende mit einer Sperre versehen ist, die den schraubenförmigen Durchgang blockiert, der von der genannten Rille und der äußeren Oberfläche der Sektion (2) der entsprechenden Rohrleitung bestimmt ist, wobei jedes Sperrelement sich bei einem Abstand von der bezüglichen Schlauchöffnung (1) befindet, der etwas größer ist als die Länge der Einschnitte (4).

2. Flexible Metallschlauchanordnung nach Anspruch 1 dadurch gekennzeichnet, daß die Spermittel Nieten (8) enthalten, je auf dem Schlauch (1) angepaßt, so daß deren Kopf die innere Rille blockiert.

3. Flexible Metallschlauchanordnung, nach Anspruch 1 dadurch gekennzeichnet, daß die Breite des Ringes (5) größer ist als die Länge der Einschnitte (4) in der Längsrichtung, und daß jede Niete (8) auch die Wand eines Ringes (5) durchquert.

**Revendications**

1. Tuyauterie métallique flexible, comprenant un tuyau métallique flexible (1) qui relie deux tronçons d'une conduite destinée au passage d'un fluide gazeux à temperature élevée, telle que par exemple la conduite d'échappement d'un moteur de véhicule automobile, ce tuyau flexible étant constitué par une bande métallique enroulée en hélice qui forme une pluralité de spires unies les unes aux autres par des rebords pliés de la bande de façon à définir un sillon hélicoïdal (7) sur la surface intérieure du tuyau flexible, caractérisée en ce que:

— le diamètre intérieur du tuyau flexible (1) correspond sensiblement au diamètre extérieur de la conduite;

— les extrémités du tuyau (1) présentent, chacune, une pluralité d'entailles longitudinales (4) qui accroissent la déformabilité des extrémités du tuyau (1) de façon à faciliter l'introduction, dans les extrémités de ce tuyau flexible (1) des deux tronçons de conduite (2) reliés;

— sur chaque extrémité du tuyau (1) est monté un collier (5) ayant des moyens de serrage (6) pour enserrer les deux tronçons de conduite (2) dans les extrémités du tuyau flexible (1), et

— le sillon hélicoïdal intérieur (7) du tuyau flexible (1) à chaque extrémité de ce tuyau flexible (1), est pourvu d'un organe de bouchage qui bouche le passage hélicoïdal défini par ledit sillon et par la surface extérieure du tronçon de conduite (2) correspondant, chaque organe de bouchage étant situé à une distance de l'embouchure respective du tuyau (1) qui est légèrement supérieure à la longueur des entailles (4).

2. Tuyauterie métallique flexible selon la revendication 1, caractérisée en ce que les moyens de bouchage comprennent des rivets (8) chacun desquels est adapté au tuyau (1) de façon à ce que sa tête bouche le sillon intérieur.

3. Tuyauterie métallique flexible selon la revendication 1, caractérisée en ce que le collier (5) a une largeur supérieure à la longueur des entailles longitudinales (4) et que chaque rivet (8) passe également à travers la paroi du collier (5).

FIG. 1

FIG. 2